# EUROPÄISCHE PATENTSCHRIFT

(11) **EP 1 213 191 B1**
(45) Veröffentlichungstag und Bekanntmachung des Hinweises auf die Patenterteilung: **18.08.2004**
(21) Anmeldenummer: 01126162.5
(22) Anmeldetag: 03.11.2001
(51) Int. Cl.: B60R 21/045, B60K 37/00

(54) **Instrumententafeln für Kraftfahrzeuge**
Dashboard for motor vehicle
Tableau de bord pour véhicule automobile

(30) Priorität: 06.12.2000 DE 10060537
(43) Veröffentlichungstag der Anmeldung: 12.06.2002
(73) Patentinhaber: Bayerische Motoren Werke Aktiengesellschaft, 80809 München (DE)
(72) Erfinder: Schmitt, Wolfgang, 84184 Tiefenbach (DE); Thomas, David, 82152 Planegg (DE); Amthor, Joachim, 93101 Pfakofen (DE); Lackermeier, Hubert, 84100 Niederaichbach (DE); Hirndorf, Torsten, 84034 Landshut (DE); Melzig, Joachim, 84036 Landshut (DE); Ostermann, Folkert, 84095 Furth (DE); Moseler, Thomas, 84028 Landshut (DE)

(56) Entgegenhaltungen:
- DE-A- 4 204 495
- FR-A- 2 729 913
- US-A- 5 190 803

## Beschreibung

Die Erfindung bezieht sich auf ein Verfahren zum Herstellen von Instrumententafeln gemäß des Oberbegriffs des Patentanspruchs 1.

Aus der FR 2 729 913 A1 ist eine Instrumententafel für Kraftfahrzeuge bekannt, die aus einem Formträger und einem auf diesem vorgesehenen Schaumkörper besteht. Der Schaumkörper ist seinerseits von einer Abdeckung überdeckt, wobei bei unterschiedlich formgestaltetem Schaumkörper der Formträger jeweils formmäßig gleichartig ausgebildet ist.

Ferner ist in der DE 36 20 881 C2 eine Instrumententafel offenbart, die einen aus Kunststoff bestehenden Formträger und einem auf diesem vorgesehenen Schaumkörper hat, der seinerseits mit einer Abdeckung versehen ist. Bei mehreren Instrumententafeln mit jeweils unterschiedlich formgestalteten Schaumkörpern muss jedoch die Formstruktur der Formträger an den jeweiligen Schaumkörper angepasst werden. Daher ist zur Herstellung eines aus Kunststoff bestehenden Formträgers jeweils speziell ein für diesen vorgesehenes Spritzgusswerkzeug erforderlich.

Aufgabe der Erfindung ist es daher, ein Verfahren zum Herstellen einer Instrumententafel für Kraftfahrzeuge zu schaffen, wobei ein Formträger sehr kostengünstig herzustellen ist.

Zur Lösung der Aufgabe sind die im Patentanspruch 1 dargelegten Merkmale vorgesehen.

Der Formträger ist an den Umfangskonturen stets gleichartig gestaltet, sodass für seine Herstellung vorteilhafterweise nur ein einziges Werkzeug - nämlich Spritzguss- oder Blechumformwerkzeug - erforderlich ist, wobei der auf dem Formträger vorgesehene Schaumkörper dennoch eine unterschiedliche Außenform aufweisen kann. Somit sind Instrumententafeln, die jeweils eine unterschiedliche Außenform aufweisen, sehr preisgünstig herstellbar. Darüber hinaus ergibt sich auch ein geringerer Teileaufwand und eine geringfügige Gewichtsverminderung.

Im Formträger und /oder im Schaumkörper dient zumindest eine nutartige Vertiefung als ein Luftführungskanal. Dieser hat bei Ausbildung einer nutartigen Vertiefung im Formträger und im Schaumkörper und bei Zuwendung der Vertiefungen zueinander einen hohen Luftdurchsatz. Ferner ist hierdurch in sehr einfacher und zuverlässiger Weise ein Luftführungskanal gebildet.

Ein Verfahren zum Herstellen einer Instrumententafel besteht erfindungsgemäß darin, dass während des Aufschäumens einer ihrerseits mit der Abdeckung verbundenen Schaumstoffschicht auf den Schaumkörper in den Luftführungskanal ein Überdruck eingeleitet wird, der zweckmäßigerweise etwa 2 bis 4 bar beträgt. Durch diese Maßnahme ist gewährleistet, dass an der Außenseite der Abdeckung im Bereich des Luftführungskanals keine unschönen Vertiefungen (Einfallstellen) entstehen.

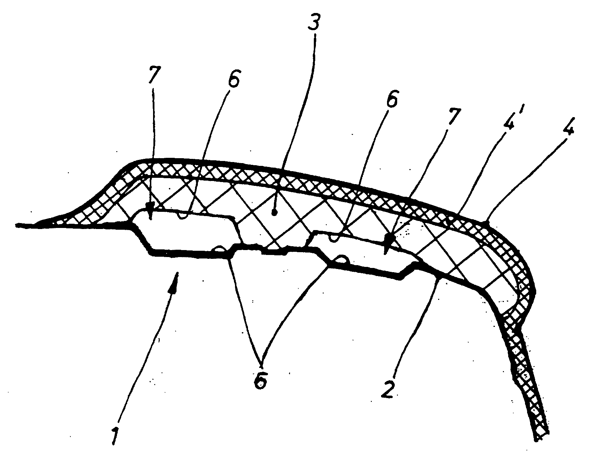

Ein Ausführungsbeispiel der Erfindung ist in der Zeichnung dargestellt und wird im Folgenden erläutert. Diese zeigt einen Schnitt einer erfindungsgemäßen Instrumententafel.

Die in der Zeichnung dargestellte Instrumententafel 1 befindet sich in einem Personenkraftwagen und besteht aus einem aus Kunststoff gefertigten Formträger 2 und aus einem vorgefertigten Schaumkörper 3, der auf dem Formträger 3 angebracht ist. Der Schaumkörper 3 ist seinerseits von einer aus Polyurethan bestehenden Schaumstoffschicht 4' überdeckt, die ihrerseits mit einer folienartigen Abdeckung 4 verbunden ist.

Der Schaumkörper 3 kann in Dicke und Breite sowie in der Formgestaltung verschiedenartig ausgebildet sein, wobei jedoch der Formträger 2 stets gleichartig formmäßig gestaltet und daher stets durch ein gleiches Spritzgusswerkzeug herstellbar ist.

Wie in der Zeichnung ersichtlich, sind sowohl im Formträger 2 als auch im Schaumkörper 3 jeweils zwei längsverlaufende, nutartige Vertiefungen 6 ausgebildet, die einander zugewandt sind und dabei jeweils einen Luftführungskanal 7 mit großem Luftdurchsatz bilden.

Der Schaumkörper 3 wird als ein vorgefertigtes Teil unmittelbar auf dem Formträger 2 befestigt. Um zu gewährleisten, dass an der Außenseite der Abdeckung 4 sich im Bereich der Luftführungskanäle 7 keine Einfallstellen bilden, wird während des Aufschäumens der Schaumstoffschicht 4' auf den Schaumkörper 3 in die Luftführungskanäle 7 ein Luftüberdruck von etwa 2 bis 4 bar eingeleitet.

## Patentansprüche

1. Verfahren zum Herstellen einer Instrumententafel (1), mit mindestens einem Formträger (2) sowie wenigstens einem auf diesem vorgesehenen Schaumkörper (3), und mit mindestens einem, im Schaumkörper (3) und / oder im Formträger (2) ausgebildeten Luftführungskanal (7), wobei auf den Schaumkörper (3) eine ihrerseits von einer Abdeckung (4) überdeckte Schaumstoffschicht (4') aufgeschäumt wird, **dadurch gekennzeichnet, dass** während des Aufschäumens der Schaumstoffschicht (4') auf den Schaumkörper (3) in den Luftführungskanal (7) ein Luftüberdruck eingeleitet wird.

2. Verfahren nach Anspruch 1, **dadurch gekennzeichnet, dass** in den Luftführungskanal(7) ein Luftüberdruck von etwa 2 bis 4 bar eingeleitet wird.

## Claims

1. A method of making an instrument board (1) comprising at least one moulded bearer (2), at least one foam member (3) provided on it, and at least one air guide duct (7) formed in the foam member (3) and/or in the moulded bearer (2), wherein a foam layer (4') covered by a cover (4) is foamed on to the foam member (3), **characterised in that** during the process of foaming the layer (4') on to the foam member (3) an excess air pressure is introduced into the air guide duct (7).

2. A method according to claim 1, **characterised in that** an excess air pressure of about 2 to 4 bar is introduced into the air guide duct (7).

## Revendications

1. Procédé de fabrication d'un tableau de bord (1), comportant au moins un support moulé (2) ainsi qu'au moins un corps en mousse (3) prévu sur celui-ci avec au moins un canal d'alimentation en air (7) configuré dans le corps en mousse (3) et/ou dans le support moulé (2), une couche de matériau en mousse (4') recouverte d'un revêtement (4) étant formée par moussage sur le corps en mousse (3),
**caractérisé en ce que**
pendant le moussage de la couche de matériau en mousse (4') sur le corps en mousse (3), une surpression d'air est introduite dans le canal d'alimentation en air (7).

2. Procédé selon la revendication 1,
**caractérisé en ce qu'**
une surpression d'air d'environ 2 à 4 bars est introduite dans le canal d'alimentation en air (7).
